# DEMANDE DE BREVET EUROPEEN

(11) **EP 2 239 164 A1**
(43) Date de publication de la demande: **13.10.2010**
(21) Numéro de dépôt: 10290182.4
(22) Date de dépôt: 06.04.2010
(51) Int. Cl.: B60R 5/04

(54) **Dispositif de recouvrement des bagages disposés dans un compartiment à bagages de véhicule automobile**

(30) Priorité: 06.04.2009 FR 0901681
(71) Demandeur: Centre d'étude et de recherche pour l'automobile (CERA), 51100 Reims (FR)
(72) Inventeur: Brillon, Eric, 51140 Treslon (FR); Dorido, Thierry, 08140 Daigny (FR)
(74) Mandataire: Sayettat, Julien Christian

(57) **Abrégé**

L'invention concerne un dispositif (1) de recouvrement des bagages disposés dans un compartiment à bagages de véhicule automobile, ledit dispositif comprenant un rideau (2) souple monté dans un cadre (3) périphérique, ledit rideau comprenant une couche d'aspect (4) et une couche d'envers (6), au moins l'une desdites couches étant poreuse, ledit rideau comprenant en outre une couche d'absorption acoustique (5) poreuse, ladite couche d'absorption étant disposée entre ladite couche d'envers et ladite couche d'aspect.

## Description

L'invention concerne un dispositif de recouvrement des bagages d'un véhicule automobile.

Il est connu de réaliser un dispositif de recouvrement des bagages disposés dans un compartiment à bagages de véhicule automobile, ledit dispositif comprenant un rideau souple monté dans un cadre périphérique.

Les rideaux connus sont à base de matériaux de fine épaisseur, tels que des non tissés, qui ne permettent pas de participer à la protection acoustique de l'habitacle à l'égard du bruit émis par le compartiment à bagages ou, de façon plus générale, du bruit déjà présent dans l'habitacle.

L'invention a pour but de pallier cet inconvénient.

A cet effet, l'invention propose un dispositif de recouvrement des bagages disposés dans un compartiment à bagages de véhicule automobile, ledit dispositif comprenant un rideau souple monté dans un cadre périphérique, ledit rideau comprenant une couche d'aspect et une couche d'envers, au moins l'une desdites couches étant poreuse, ledit rideau comprenant en outre une couche d'absorption acoustique poreuse, ladite couche d'absorption étant disposée entre ladite couche d'envers et ladite couche d'aspect.

L'agencement proposé permet au dispositif de présenter des propriétés de protection acoustique.

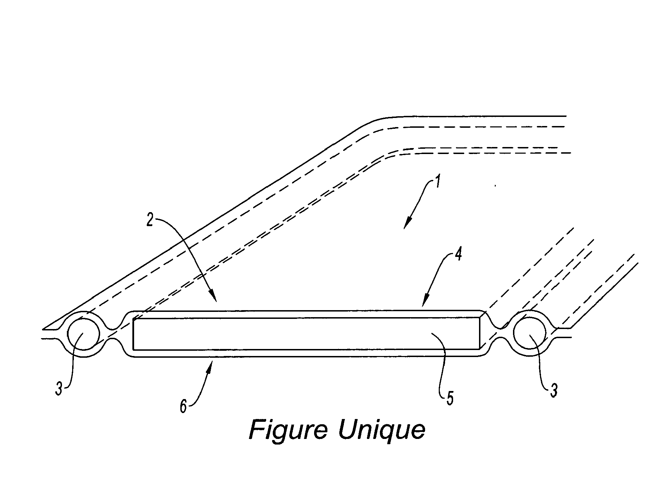

D'autres particularités et avantages de l'invention apparaîtront dans la description qui suit, faite en référence à la figure jointe qui est une représentation schématique partielle en perspective et en coupe d'un dispositif selon une réalisation.

En référence à la figure, on décrit un dispositif 1 de recouvrement des bagages disposés dans un compartiment à bagages de véhicule automobile, ledit dispositif comprenant un rideau 2 souple monté dans un cadre 3 périphérique, ledit rideau comprenant une couche d'aspect 4 et une couche d'envers 6, au moins l'une desdites couches étant poreuse, ledit rideau comprenant en outre une couche d'absorption acoustique 5 poreuse, ladite couche d'absorption étant disposée entre ladite couche d'envers et ladite couche d'aspect.

Selon une réalisation, la couche d'absorption 5 présente une résistivité au passage de l'air comprise entre 10 000 et 100 000 N.s.m⁻⁴.

Selon une réalisation, la couche d'aspect 4 est poreuse, étant par exemple à base de non tissé, et la couche d'envers 6 est étanche, étant par exemple à base de film plastique.

Une telle réalisation permet de réaliser une absorption du bruit présent dans l'habitacle, qui traverse la couche d'aspect 4 pour être absorbé dans la couche d'absorption 5, tout en assurant, au moyen de la couche d'envers 6 étanche, une isolation du bruit issu du compartiment à bagages.

Selon une autre réalisation, la couche d'envers 6 est poreuse, étant par exemple à base de non tissé, et la couche d'aspect 4 est étanche, étant par exemple à base de film plastique.

Une telle réalisation permet de réaliser une absorption du bruit présent dans le compartiment à bagages, qui traverse la couche d'envers 6 pour être absorbé dans la couche d'absorption 5, tout en assurant, au moyen de la couche d'aspect 4 étanche, une isolation du bruit issu du compartiment à bagages.

La couche d'absorption 5 est par exemple à base de feutre ou de mousse souple élastiquement compressible, la mousse étant par exemple à base de polyuréthanne.

Selon la réalisation représentée, le cadre 3 est inséré entre les couches d'aspect 4 et d'envers 6.

Les couches d'aspect 4 et d'envers 6 sont associées entre elles par exemple par soudure, collage ou couture.

De façon non représentée, le rideau 2 peut être conformé, par exemple par thermoformage, pour être non planaire, en présentant par exemple une forme de cuvette.

## Revendications

1. Dispositif (1) de recouvrement des bagages disposés dans un compartiment à bagages de véhicule automobile, ledit dispositif comprenant un rideau (2) souple monté dans un cadre (3) périphérique, ledit dispositif étant **caractérisé en ce que** ledit rideau comprend une couche d'aspect (4) et une couche d'envers (6), au moins l'une desdites couches étant poreuse, ledit rideau comprenant en outre une couche d'absorption acoustique (5) poreuse, ladite couche d'absorption étant disposée entre ladite couche d'envers et ladite couche d'aspect.

2. Dispositif selon la revendication 1, **caractérisé en ce que** la couche d'absorption (5) présente une résistivité au passage de l'air comprise entre 10 000 et 100 000 N.s.m⁻⁴.

3. Dispositif selon la revendication 1 ou 2, **caractérisé en ce que** la couche d'aspect (4) est poreuse et la couche d'envers (6) est étanche.

4. Dispositif selon la revendication 1 ou 2, **caractérisé en ce que** la couche d'envers (6) est poreuse et la couche d'aspect (4) est étanche.

5. Dispositif selon l'une quelconque des revendications 1 à 4, **caractérisé en ce que** la couche d'absorption (5) est à base de feutre.

6. Dispositif selon l'une quelconque des revendications 1 à 4, **caractérisé en ce que** la couche d'absorption (5) est à base de mousse.

7. Dispositif selon l'une quelconque des revendications 1 à 6, **caractérisé en ce que** le cadre (3) est inséré entre les couches d'aspect (4) et d'envers (6).

8. Dispositif selon l'une quelconque des revendications 1 à 7, **caractérisé en ce que** le rideau (2) est conformé pour être non planaire.
